Europäisches Patentamt

European Patent Office

Office européen des brevets

(11) Veröffentlichungsnummer: **0 298 187 B1**

# (12) EUROPÄISCHE PATENTSCHRIFT

(45) Veröffentlichungstag der Patentschrift: **16.10.91**

(51) Int. Cl.⁵: **F02D 11/10, F02D 41/22**

(21) Anmeldenummer: **88100407.1**

(22) Anmeldetag: **14.01.88**

(54) **Elektrisches Gaspedal.**

(30) Priorität: **09.07.87 DE 3722633**

(43) Veröffentlichungstag der Anmeldung:
**11.01.89 Patentblatt 89/02**

(45) Bekanntmachung des Hinweises auf die
Patenterteilung:
**16.10.91 Patentblatt 91/42**

(84) Benannte Vertragsstaaten:
**DE FR GB SE**

(56) Entgegenhaltungen:
EP-A- 0 106 011          DE-A- 3 047 454
FR-A- 2 018 587          FR-A- 2 435 369
GB-A- 2 139 381          US-A- 4 509 480

(73) Patentinhaber: **VDO Adolf Schindling AG**
**Gräfstrasse 103**
**W-6000 Frankfurt/Main 90(DE)**

(72) Erfinder: **Wokan, Andreas**
**Jakobstrasse 22**
**W-6100 Darmstadt(DE)**
Erfinder: **Helmstädter, Gerald**
**Rudolf-Diesel-Strasse 1**
**W-6108 Weiterstadt(DE)**
Erfinder: **Probst, Kurt**
**Altkönigstrasse 19**
**W-6231 Schwalbach/Ts.(DE)**

(74) Vertreter: **Klein, Thomas, Dipl.-Ing. (FH)**
**Sodener Strasse 9 Postfach 6140**
**W-6231 Schwalbach a. Ts.(DE)**

## Beschreibung

Die Erfindung bezieht sich auf ein elektrisches Gaspedal für Kraftfahrzeuge mit einem Sollwertgeber, von dem einer elektronischen Reglereinheit mit Drehzahlmessung ein elektrisches Sollwertsignal zuleitbar ist, mit einem durch elektrische Signale der Reglereinheit steuerbaren, in einem durch eine erste und eine zweite Endstellung begrenzten maximal möglichen Sollstellbereich verstellbaren Stellglied, durch das über eine Übertragungseinheit eine in einem durch eine erste und eine zweite Endstellung begrenzten Iststellbereich verstellbare Verstelleinrichtung zur Steuerung der Motorleistung mechanisch betätigtbar ist, mit mindestens einer zusätzlichen Ansteuereinheit zur Leerlaufdrehzahl-Anhebung, mit einem Sollwertgeber-Sicherheitskontakt, der nach einem bestimmten Stellweg des Sollwertgebers schließt und mit einem Stellglied-Sicherheitskontakt, der nach einem bestimmten Stellweg des Stellgliedes öffnet, sowie mit einer Sicherheitskontaktüberwachungsschaltung, die die Arbeitsweise der Sicherheitskontakte überwacht und bei einem Fehler einer der Sicherheitskontakte eine Fehlerreaktion auslöst.

Bei einem bekannten System dieser Art (siehe z.B. DE-A-2839467) werden die Sicherheitskontakte, um eine möglichst frühe Fehlererkennung zu ermöglichen, so eingestellt, daß sie bei möglichst kleinen Stellwegen bereits schalten. Durch Anhebung der Leerlaufdrehzahl in Abhängigkeit von bestimmten Faktoren, wie z.B. der Motortemperatur bei niedrigen Temperaturen oder aufgrund der Zuschaltung von zusätzlichen Verbrauchern, wie z.B. einer Klimaanlage, liegt die Leerlaufregelstellung oberhalb des Schaltpunktes des Stellgliedsicherheitskontaktes. Bei nicht betätigtem Sollwertgeber, wenn also ein Leerlaufsollwertgebersignal ansteht, sind beide Sicherheitskontakte nicht betätigt und die Sicherheitsschaltung würde ansprechen. In einem solchen Falle wäre ein ordnungsgemäßer Betrieb der Brennkraftmaschine nicht möglich. Dies tritt z.B. bei Brennkraftmaschinen mit Einspritzpumpen mit separatem Motorstop auf. Bei Brennkraftmaschinen mit Einspritzpumpen mit Motorstop über den Einspritzpumpenhebel liegt bei einer Anhebung der Leerlaufdrehzahl aufgrund der oben genannten Faktoren oder bei einer großen Stellbereichseinschränkung die Stellung des Stellgliedes, wenn die Motorstopfunktion nicht betätigt wird, in einer Stellung oberhalb des Schaltpunktes des Stellglied-Sicherheitskontaktes. Bei nicht betätigtem Sollwertgeber sind wiederrum beide Schaltkontakte nicht betätigt, d.h. sie sind ausgeschaltet und die Sicherheitsschaltung spricht wiederum an.

Die Folge hiervon ist wiederum, daß wegen der Fehlerreaktion der Sicherheitsschaltung ein Betrieb der Brennkraftmaschine bei einer Anhebung der Leerlaufdrehzahl über den Schaltpunkt des Stellglied-Sicherheitskontaktes aufgrund von zusätzlichen Verbrauchern oder in Abhängigkeit von der Motortemperatur ein Betrieb der Brennkraftmaschine immer dann nicht möglich ist, wenn das Signal des Sollwertgebers einem Sollwert entspricht, der unterhalb des Schaltpunktes des Sollwertgeber-Sicherheitskontaktes liegt.

Aufgabe der Erfindung ist es, einen Betrieb der Brennkraftmaschine in allen Betriebsbereichen zu ermöglichen und eine Sicherheitsüberwachung der Sicherheitskontakte trotz Stellbereichseinschränkung oder Anhebung der Leerlaufdrehzahl über den Schaltpunkt zu gewährleisten.

Diese Aufgabe wird durch die im Anspruch 1 angegebenen Mittel gelöst.

Durch diese Ausgestaltung wird sichergestellt, daß auch bei einer Stellbereichseinschränkung, die aus den eingangs erläuterten Gründen vorgenommen wird, eine Fehlerreaktion ausgehend von der Sicherheitsschaltung vermieden wird.

Der Grundgedanke bei der vorliegenden Erfindung besteht im wesentlichen darin, in den Betriebszuständen, bei denen bei der bisher bekannten Ausgestaltung eine Fehlerreaktion eintreten würde, die Sicherheitskontakte bis zu einem Drehzahlschwellwert, der oberhalb des Leerlaufdrehzahlregelsollwertes vermehrt um einen geringen Sicherheitszuschlag liegt, zu überbrücken, damit die Sicherheitsschaltung keine Fehlerreaktion auslöst. Bei Drehzahlen , die oberhalb dieses Schwellwertes liegen, welche von der Reglereinheit festgestellt werden, wird bei Anliegen eines Sollwertgebersignals entsprechend der Leerlaufdrehzahl, also bei einer tatsächlich höheren Motordrehzahl als es dem Sollwertgebersignal entspricht, eine Überprüfung des Sicherheitskontaktes des Stellgliedes vorgenommen. Zu diesem Zweck wird durch die Reglereinheit das Stellglied kurzzeitig soweit längs seines Stellweges zurückgeführt, daß der Sicherheitskontakt geschaltet haben muß. Dies ist üblicherweise im Schubbetrieb möglich, kann aber auch dann durchgeführt werden, wenn der Einspritzpumpenhebel aufgrund einer Betätigung der Motor-Aus-Taste in die Motorstopstellung bewegt wird.

Um für Motoren mit Motorstop über Einspritzpumpenhebel einen Stillstand des Motors zu verhindern, was bei Fahrzeugen mit Servoaggregaten zu einer erheblichen Beeinträchtigung der Sicherheit führen würde, wenn beispielsweise Lenk- und Bremshilfen ausfallen würden, verhindert in weiterer Ausgestaltung der Erfindung die Reglereinheit bei Motordrehzahlen, die nur geringfügig über der Leerlaufdrehzahl jedoch unterhalb des Schwellwertes liegen, eine Kontrollrückführung des Stellgliedes und läßt bei darüber liegenden Drehzahlen nur eine kurzfristige Kontrollrückführung zu.

Die Erfindung wird nachstehend anhand schematischer Darstellungen des Schaltungsaufbaus und des Funktionsschemas näher erläutert. In der Zeichnung zeigen:

Fig. 1     ein Schaltungsschema;

Fig. 2     ein Diagramm über die Arbeitsweise der Sicherheitskontakte; und

Fig. 3     ein Schema der Funktionslogik.

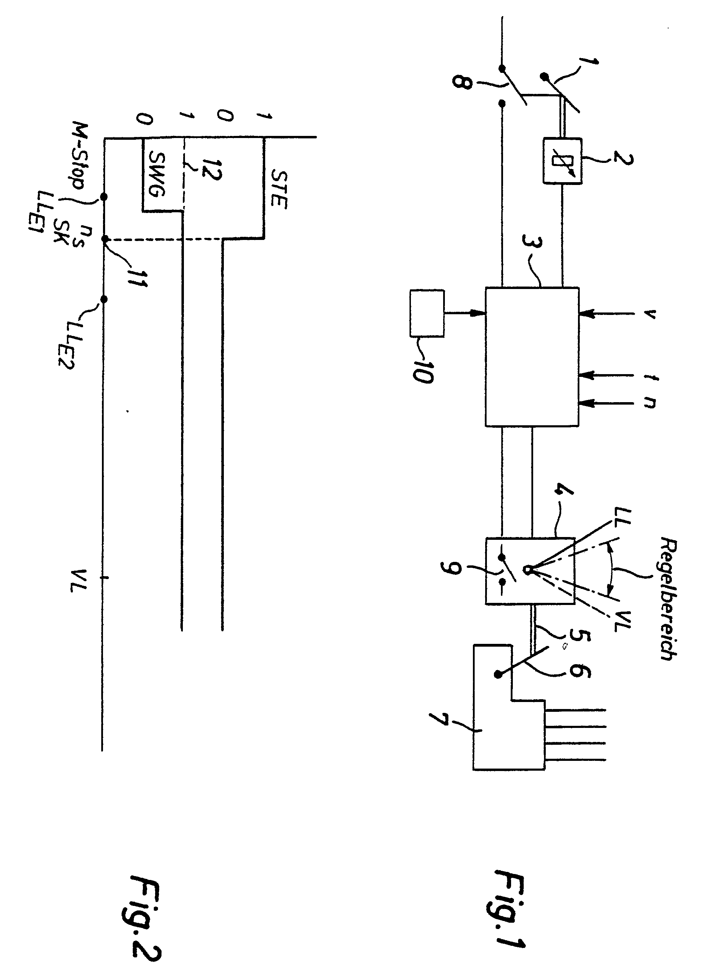

Wie aus Fig. 1 ersichtlich, umfaßt die Gesamtanordnung ein Gaspedal 1, einen Sollwertgeber 2, eine mehrere Reglerfunktionen umfassende Reglereinheit 3, ein Stellglied 4, eine Übertragungseinheit 5, eine Verstelleinrichtung 6 einer Einspritzpumpe 7, einen vom Gaspedal 1 betätigbaren Sicherheitskontakt 8 des Sollwertgebers und einen vom Stellglied 4 betätigbaren Sicherheitskontakt 9 Die Reglereinheit 3 umfaßt mehrere Zusatzfunktionen und ist in der Lage, die Stellung des Stellgliedes 4, beispielsweise bei Kaltstart, aufgrund einer Tempomat-Sollgeschwindigkeit oder, in Abhängigkeit von einem zusätzlichen Verbraucher 10 durch Anheben der Leerlaufdrehzahl zu verstellen, wodurch sie eventuell über dem Sicherheitskontaktschaltpunkt liegen kann.

Um die Eigensicherheit der Anlage, z.B. bei Kurzschluß, unbedingt zu gewährleisten, sind die Sicherheitskontakte 8 und 9 vorgesehen. Der Sicherheitskontakt 8, der dem Sollwertgeber zugeordnet ist, schließt nach einem bestimmten Stellweg, d.h. bei einer bestimmten Winkelstellung des Gaspedals, also bei einer bestimmten Sollwertstellung. Der Sicherheitskontakt 9, der in Abhängigkeit vom Stellweg des Stellgliedes, also in Abhängigkeit von der Winkelstellung des Stellgliedes 4 arbeitet, ist, beginnend vom Anschlag bis zu seinem Schaltpunkt, der in Fig. 2 mit 11 bezeichnet ist, geschlossen und öffnet bei weiterer Verstellung des Stellgliedes über diesen Schaltpunkt hinaus. Beide Schalter bilden eine "Oder-Verknüpfung" und bewirken, daß ein Befehl von der Reglereinheit 3 zum Stellglied nur dann übertragen wird, wenn einer der beiden Sicherheitskontakte eingeschaltet ist.

Wenn nun aufgrund einer Regelstellungsänderung die Regelstellung für die Leerlaufdrehzahl oberhalb des Sicherheitsschaltpunktes liegt, was dann der Fall ist, wenn die Leerlaufdrehzahl aufgrund einer niedrigen Motortemperatur oder aufgrund zusätzlicher Verbraucher angehoben werden muß oder eine mechanische Einschränkung vorliegt, dann besteht für die entsprechende Sicherheitsschaltung innerhalb der Reglereinheit keine Möglichkeit, die korrekte Funktionsweise der Sicherheitskontakte zu überprüfen, weil in diesem Betriebszustand die Leerlaufregelstellung oberhalb dieser Schaltpunkte liegt. Diese neue Leerlaufregelstellung ist in Fig. 2 mit $LL_{E2}$ bezeichnet. Bei normalem, nicht eingeschränktem Stellbereich oder nicht angehobener Leerlaufregelstellung würde die Leerlaufdrehzahlregelstellung bei einem niedrigeren Wert liegen, der in Fig. 2 mit $LL_{E1}$ bezeichnet ist. Wird nun bei kaltem Motor oder durch Einschaltung von Nebenaggregaten die erforderliche Leerlaufregelstellung oberhalb des Sicherheitsschaltpunktes 11 eingestellt, so wären bei nicht betätigtem Sollwertgeber beide Sicherheitskontakte ausgeschaltet und die Sicherheitsüberwachung würde zu einer entsprechenden Fehlerreaktion führen.

Um diesen Zustand nicht eintreten zu lassen, wird bis zu einem bestimmten Schwellwert einer Drehzahl, die oberhalb des erhöhten Drehzahlregelungssollwertes vermehrt um eine kleine Sicherheitstoleranz liegt, die Sicherheitskontakte überbrückt, wobei die Reglereinheit die Drehzahl ständig feststellt. Diese Überbrückung ist in Fig. 2 durch eine gestrichelte Linie 12 angedeutet. Wird eine über diesem Schwellwert liegende Drehzahl von der Reglereinheit gemessen, ohne daß ein entsprechendes Sollwertsignal $n_S$ vom Sollwertgeber vorliegt, so wird diese Überbrückung 12 aufgehoben und von der Sicherheitsschaltung ein Fehler angenommen.

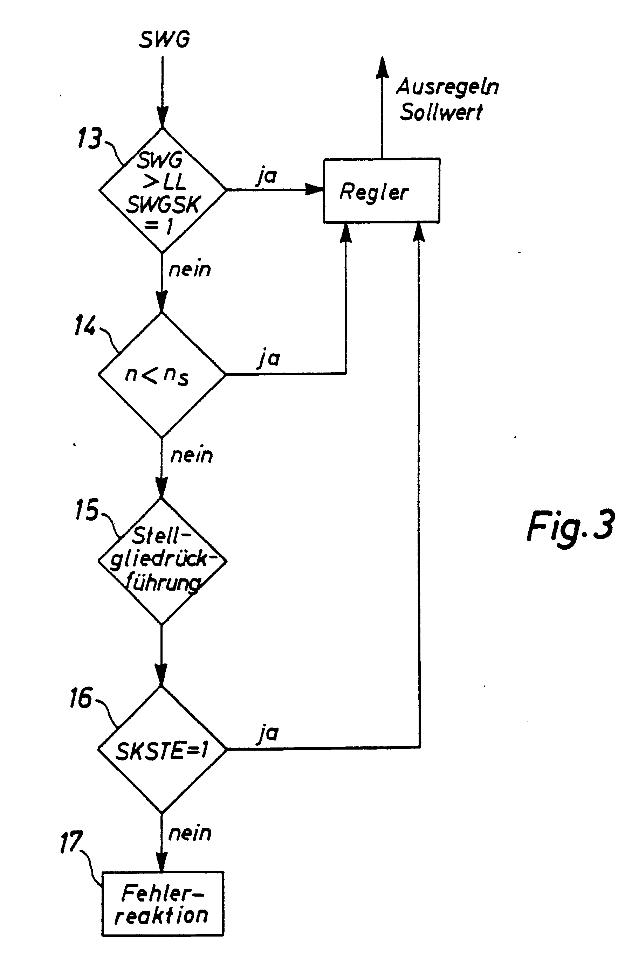

Um Gewißheit darüber zu erlangen, ob tatsächlich ein Fehler vorliegt, wird entsprechend der Funktionslogik nach Fig. 3 vorgegangen.

Der Überwachungsschritt 13 gemäß Fig. 3 stellt die übliche Überwachung des Sicherheitskontaktes dar. Hierbei wird durch die Sicherheitsschaltung festgestellt ob ein Sollwertsignal vom Sollwertgeber vorliegt und der dazugehörige Sicherheitskontakt geschaltet hat, was im Überwachungsschritt 13 mit SWGSK = 1 dargestellt ist.

Wird bei der weiteren Überprüfung entsprechend dem Überprüfungsschritt 14 festgestellt, daß die tatsächliche Drehzahl unterhalb des mit $n_S$ bezeichneten Schwellwertes liegt, dann wird die Funktionsweise als richtig erkannt und das Sollwertsignal zur Ausregelung an die Reglereinheit weitergeleitet. Liegt dagegen die tatsächlich festgestellte Drehzahl oberhalb des Schwellwertes $n_S$ und ist keine Schaltung des Sicherheitskontaktes 8 festgestellt worden, so wird eine weitere Maßnahme entsprechend dem Überprüfungsschritt 15 durchgeführt

Diese weitere Maßnahme zur Durchführung der Sicherheitsüberwachung besteht darin, daß bei über dem Schwellwert liegender Motordrehzahl und bei Fehlen eines entsprechenden Signals des Sollwertgebers von der Reglereinheit Schubbetrieb erkannt wird, da die Reglereinheit abgeregelt hat. Das Stellglied wird hierauf in eine Stellung zurückgeführt, in der der Sicherheitskontakt 9 schalten muß. Wird hierbei entsprechend dem Überprüfungsschritt 16 ein Schalten des Sicherheitskontaktes 9 festgestellt, so wird das Sollwertsignal an die Reglereinheit weitergeleitet. Ist dies nicht der Fall, dann erfolgt eine Fehlerreaktion, wobei entweder ein Eingriff in das Getriebe oder die Rückstellung auf die Leerlaufdrehzahl erfolgen kann. Eine Motorstopfunktion wird hierbei nicht durchgeführt, um die weitere Betriebsweise von Servoraggregaten nicht zu beeinträchtigen. Dieser Schritt ist in Fig. 3 mit 17 bezeichnet.

**Patentansprüche**

1. Elektrisches Gaspedal (1) für Kraftfahrzeuge mit einem Sollwertgeber (2), von dem einer elektronischen Reglereinheit (3) mit Drehzahlmessung (n) ein elektrisches Sollwertsignal zuleitbar ist, mit einem durch elektrische Signale der Reglereinheit (3) steuerbaren, in einem durch eine erste und eine zweite Endstellung begrenzten maximal möglichen Sollstellbereich verstellbaren Stellglied (4), durch das über eine Übertragungseinheit (5) eine in einem durch eine erste und eine zweite Endstellung begrenzten Iststellbereich verstellbare Verstelleinrichtung (6) zur Steuerung der Motorleistung mechanisch betätigbar ist, mit mindestens einer zusätzlichen Ansteuereinheit (10) zur Leerlaufdrehzahl-Anhebung, mit einem Sollwertgeber-Sicherheitskontakt (8), der nach einem bestimmten Stellweg des Sollwertgebers schließt und mit einem Stellglied-Sicherheitskontakt (9), der nach einem bestimmten Stellweg des Stellgliedes öffnet, sowie mit einer Sicherheitsschaltung, die Arbeitsweise der Sicherheitskontakte überwacht und bei einem Fehler einer der Sicherheitskontakte eine Fehlerreaktion auslöst, dadurch **gekennzeichnet,** daß die Reglereinheit (3) bei vorhandener Leerlaufdrehzahl-Anhebung den Sollwertgeber-Sicherheitskontakt (8) bis zu einem Drehzahl-Schwellwert ($n_S$) überbrückt und bei darüberliegender Drehzahl die Überbrückung (12) aufhebt und daß bei Überschreiten dieses Schwellwertes ($n_S$) und Fehlen des Schließsignals des Sollwertgebers die Reglereinheit (3) das Stellglied (4) in eine Position zurückführt, in der der Stellglied-Sicherheitskontakt (9) geschaltet haben muß.

2. Elektrisches Gaspedal nach Anspruch 1 für Motoren mit Motorstop über Einspritzpumpenhebel, dadurch gekennzeichnet, daß die Reglereinheit (3) bei Motordrehzahlen, die nur geringfügig über der Leerlaufdrehzahl, jedoch unterhalb des Schwellwertes ($n_S$) liegen, eine Kontrollrückführung des Stellgliedes (4) verhindert und bei darüber liegenden Drehzahlen nur eine kurzfristige Kontrollrückführung zuläßt.

**Claims**

1. Electrical accelerator pedal (1) for motor vehicles, with a desired-value signal emitter (2) adapted to feed an electrical desired-value signal to an electronic controller unit (3) with rotational-speed measuring means (n), with a regulating element (4) which is controllable by electrical signals of the controller unit (3) and which is adjustable in a maximum-possible desired regulating range defined by a first and a second end position, and which is adapted to operate mechanically via a transmission unit (5) an adjusting device (6) for regulating the engine power, which device is adjustable in an actual regulating range defined by a first and a second end position, with at least one additional operating unit (10) for raising the idling rotational speed, with a desired-value signal emitter safety contact (8) which closes after a specific regulating travel of the desired-value signal emitter and with a regulating-element safety contact (9) which opens after a specific regulating travel of the regulating element, and also with a safety circuit which monitors the operating of the safety contacts and triggers an error reaction in the event of an error of one of the safety contacts, characterised in that when there is an increase in the idling rotational speed the controller unit (3) bridges the desired-value signal emitter safety contact (8) up to a rotational speed threshold value ($n_S$), and discontinues the bridging (12) when the rotational speed is higher, and that, when this threshold value ($n_S$) is exceeded and the closing signal of the desired-value signal emitter is absent, the controller unit (3) returns the regulating element (4) into a position wherein the regulating-element safety contact (9) must have switched.

2. Electrical accelerator pedal according to claim 1, for engines with engine stop by injection pump lever means, characterised in that the controller unit (3) prevents control return of the regulating element (4) at engine speeds which are only slightly above the idling speed but below the threshold value ($n_S$), and allows only a short-duration control return at speeds which are thereabove.

**Revendications**

1. Pédale électrique d'accélérateur ("pédale des gaz") pour véhicules à moteur, comportant un émetteur (2) de valeur prescrite à partir duquel un signal électrique de valeur prescrite peut être envoyé à une unité électronique de régulation (3) qui mesure la vitesse de rotation V-

(n), comportant aussi unorgane réglant (4) qui peut être piloté par des signaux électriques de l'unité de régulation (3), qui peut se déplacer sur une plage maximale de positions prescrites possibles limitée par une première et une seconde positions d'extrémité, et au moyen duquel, par l'intermédiaire d'une unité de transmission (5), un dispositif de réglage (6), qui peut se déplacer sur une plage de valeurs réelles limitée par une première et par une seconde positions d'extrémité, peut être manoeuvré mécaniquement pour commander la puissance du moteur, comportant aussi au moins une unité de pilotage supplémentaire (10) pour élever la vitesse de rotation de marche à vide, comportant aussi un contact de sécurité (8) de l'émetteur de valeur prescrite qui se ferme après que l'émetteur de valeur prescrite a parcouru un chemin déterminé, comportant aussi un contact de sécurité (9) de l'organe réglant qui s'ouvre après que l'organe réglant a parcouru un chemin déterminé, et comportant aussi un circuit de sécurité, qui surveille le mode de travail des contacts de sécurité et qui, en cas de défaillance de l'un des contacts de sécurité, déclenche une réaction de défaillance, pédale caractérisée par le fait qu'en présence d'une élévation de la vitesse de rotation de marche à vide, l'unité de régulation (3) shunte le contact de sécurité (8) de l'émetteur de valeur prescrite jusqu'à une valeur de seuil ($n_S$) de la vitesse de rotation et qu'en présence d'une vitesse de rotation supérieure à cette valeur de seuil, elle supprime le shuntage (12) et par le fait qu'en présence d'un dépassement de cette valeur de seuil ($n_S$) et d'une défaillance du signal de fermeture de l'émetteur de valeur prescrite, l'unité de régulation (3) rappelle l'organe réglant (4) dans une position dans laquelle le contact de sécurité (9) de l'organe réglant doit avoir commuté.

2. Pédale électrique d'accélérateur selon la revendication 1 pour moteurs, avec arrêt du moteur au moyen du levier des pompes à injection, caractérisée par le fait qu'en présence de vitesses de rotation du moteur qui ne sont que légèrement supérieures à la vitesse de rotation de marche à vide mais inférieures à la valeur de seuil ($n_S$), l'unité de régulation (3) interdit un rappel de contrôle de l'organe réglant (4) et qu'en présence de vitesses de rotation situées au-delà, elle n'autorise qu'un bref rappel de contrôle.

Fig.2

VL

LLE2

SK $n_s$ LLE1

M-Stop

11

SWG 0 1 0 1

12

STE

EP 0 298 187 B1

6

Fig.1

7

6

5

9

4

10

3

8

2

1

u f v

VL LL

Regelbereich

SWG

*13*

SWG
>LL
SWGSK
=1

ja → Regler

Ausregeln
Sollwert

nein

*14*

n < n_s

ja

nein

*15*

Stellgliedrückführung

*16*

SKSTE=1

ja

nein

*17*

Fehlerreaktion

*Fig.3*